# EUROPÄISCHE PATENTANMELDUNG

(11) **EP 1 137 000 A2**
(43) Veröffentlichungstag der Anmeldung: **26.09.2001**
(21) Anmeldenummer: 01250018.7
(22) Anmeldetag: 15.01.2001
(51) Int. Cl.: G11B 20/00, G06F 17/30, H04H 1/02, G11B 27/034, G11B 27/10

(54) **Verfahren zum Aufbringen von reproduzierbaren Daten auf einen Datenträger**

(30) Priorität: 14.01.2000 DE 10001216
(71) Anmelder: Schulte am Hülse, Regina, 20253 Hamburg (DE)
(72) Erfinder: Schulte am Hülse, Regina, 20253 Hamburg (DE)
(74) Vertreter: Heldt, Gert, Dr. Dipl.-Ing.

(57) **Zusammenfassung**

Das Verfahren dient dem Aufbringen von reproduzierbaren Daten auf einen Datenträger. Die auf den Datenträger aufzubringenden Daten werden auf elektronischem Wege von einem Ort ihrer Entstehung zu einem Ort ihrer Aufbringung auf den Datenträger befördert. Die Daten werden per E-Mail befördert. Sie werden in einen Speicher einer ersten EDV-Anlage aufgenommen, die die Daten über eine Datenfernübertragungsanlage an eine sie aufnehmende zweite EDV-Anlage abgibt, aus der die Daten auf einem Datenträger übernommen werden. Die Daten werden vor ihrer Aufnahme auf den Datenträger in eine bereits vorhandene Datenmenge eingeordnet. Von einer zweiten EDV-Anlage empfangene Sound-Daten werden mit bereits vorhandenen Sound-Daten synchronisiert. Ein erstes Musikstück wird in Sound-Daten umgesetzt, und die übertragenen Sound-Daten eines zweiten Musikstückes werden mit den Sound-Daten eines ersten Musikstückes synchronisiert. Die Sound-Daten des ersten Musikstückes werden von einem Sänger erzeugt, dessen Gesang mit dem zweiten Musikstück synchronisert wird. Dem Sänger wird ein virtuelles Tonbandgerät auf einen Bildschirm projiziert, das über die üblichen Aufnahmefunktionen eines reellen Tonbandgerätes wie beispielsweise Vor- und Zurückspulen, Abhören und Übersprechen verfügt.

## Beschreibung

Die Erfindung betrifft ein Verfahren zum Aufbringen von reproduzierbaren Daten auf einen Datenträger.

Reproduzierbare Daten können auf einen Datenträger auf verschiedene Weise aufgebracht werden, beispielsweise über ein Tonbandgerät aber auch mit Hilfe eines Computers, dessen auf einer Festplatte gespeicherte Daten auf eine beschreibbare CD übertragen werden, auf der sie eingebrannt werden.

In manchen Fällen macht die Übertragung auf einen Datenträger, beispielsweise eine CD, insofern Schwierigkeiten, als die Daten auf besondere Weise auf dem Datenträger abgespeichert werden sollen, beispielsweise an einer besonderen Stelle der CD. Außerdem sollen die auf die CD übernommenen Daten an der jeweils ausgewählten Stelle der CD eingebrannt werden. Dazu sind Hilfsmittel erforderlich, die häufig nur in einem Studio zur Verfügung stehen.

Aufgabe der vorliegenden Erfindung ist es daher, die an einem bestimmten Ort aufgenommenen Daten an einem anderen Ort auf einen Datenträger aufzubringen.

Diese Aufgabe wird erfindungsgemäß dadurch gelöst, daß die auf den Datenträger aufzubringenden Daten auf elektronischem Wege von einem Ort ihrer Entstehung zu einem Ort ihrer Aufbringung auf den Datenträger befördert werden.

Auf diese Weise können die Daten schnell, sorgfältig und mit hoher Qualität an einen Ort transportiert werden, wo sie auf fachmännische Art und Weise auf einen Datenträger aufgebracht und auf diesem eingebrannt werden können. Datenverluste sind auf diese Weise nicht zu befürchten. Das Verfahren hat daher nicht nur im Bezug auf die große Übertragungsgeschwindigkeit sondern auch hinsichtlich der hohen Übertragungsqualität erhebliche Vorteile gegenüber bekannten Verfahren, beispielsweise der Übersendung von bespielten Datenträgern, z.B. Tonträgern.

Gemäß einer bevorzugten Ausführungsform der Erfindung werden die Daten vor ihrer Aufnahme auf den Datenträger in eine bereits vorhandene Datenmenge eingeordnet. Auf diese Weise kann auf den Datenträger eine um die übersandten Daten vergrößerte Datenmenge auf den Datenträger aufgenommen werden.

Gemäß einer weiteren bevorzugten Ausführungsform der Erfindung wird ein erstes Musikstück in Sound-Daten umgesetzt und die übertragenen Sound-Daten eines zweiten Musikstückes mit den Sound-Daten des Musikstückes synchronisiert. Auf diese Weise entsteht ein bearbeitetes Musikstück, das in einer sehr guten Qualität auf den Datenträger übernommen werden kann.

Gemäß einer weiteren bevorzugten Ausführungsform der Erfindung werden die Sound-Daten des ersten Musikstückes von einem Sänger erzeugt, dessen Gesang mit dem zweiten Musikstück synchronisiert wird. Auf diese Weise entsteht eine Bearbeitung des Musikstückes, die im Blick auf den mitwirkenden Sänger eine sehr persönliche Note besitzt.

Gemäß einer weiteren bevorzugten Ausführungsform der Erfindung werden die Sound-Daten des ersten Musikstückes dem Sänger übersandt, bei dem die Sound-Daten in das erste Musikstück übersetzt werden, der Gesang des Sängers wird dem ersten Musikstück angepaßt und in entsprechende Sound-Daten übersetzt, die zum Zwecke der Synchronisation mit den Daten des zweiten Musikstückes an eine zweite EDV-Anlage abgegeben werden. Auf diese Weise wird eine Bearbeitung eines Musikstückes unabhängig von den örtlichen Verhältnissen möglich. Einerseits kann der Sänger mit Musikstücken versorgt werden, die ihn in besonderer Weise interessieren, zum anderen können die von ihm bearbeiteten Musikstücke an ein zu diesem Zwecke spezialisiertes Unternehmen zurückgesandt werden, bei dem sie auf fachmännische Weise auf den Datenträger aufgebracht und in diesen eingebrannt werden.

Gemäß einer weiteren bevorzugten Ausführungsform der Erfindung werden die Daten auf einer von drei verschiedenen Spuren eines Datenträgers gespeichert. Auf diese Weise wird erreicht, daß die beiden anderen Spuren auf andere Weise genutzt werden können, beispielsweise im Zusammenhang mit den auf der dritten Spur gespeicherten Daten.

Gemäß einer weiteren bevorzugten Ausführungsform der Erfindung werden auf den beiden anderen Spuren, auf denen die nicht synchronisierten Daten gespeichert sind, andere Versionen des ersten Musikstückes gespeichert. Dadurch wird die Möglichkeit geschaffen, daß mehrere Versionen des Musikstückes unmittelbar nacheinander angehört und miteinander verglichen werden können.

Gemäß einer weiteren bevorzugten Ausführungsform der Erfindung werden auf den anderen beiden Spuren jeweils eine unbearbeitete und eine bearbeitete Version des ersten Musikstückes gespeichert. Durch diese Nutzung des Datenträgers können drei Versionen desselben Musikstückes miteinander verglichen werden, und zwar die originale Fassung, eine bearbeitete Fassung und die synchronisierte Fassung. Aufgrund dieses Vergleiches können Betrachtungen darüber angestellt werden, inwieweit die einzelnen Versionen voneinander abweichen und ob die Abweichungen dem Geschmack der einzelnen Zuhörer entgegenkommen oder die Zuhörer nachteilig beeinflussen.

Gemäß einer weiteren bevorzugten Ausführungsform der Erfindung wird den Sound-Daten des ersten Musikstückes als Störgeräusch ein als Hintergrundmusik gedämpfter Gesang eines Interpreten überlagert. Auf diese Weise soll verhindert werden, daß das Musikstück kostenlos heruntergeladen wird.

Gemäß einer weiteren bevorzugten Ausführungsform der Erfindung wird dem Sänger ein virtuelles Tonbandgerät auf seinen Bildschirm projiziert, das über die üblichen Aufnahmefunktionen eines reellen Tonbandgerätes verfügt. Auf diese Weise wird eine Erleichterung für den Sänger geschaffen, das von ihm zu singende Musikstück einzuüben. Er kann wie bei einem üblichen Tonbandgerät vor- und zurückspulen, abhören und korrigieren, falls ihm bestimmte Passagen seines Gesangs im Nachhinein mißfallen.

Gemäß einer weiteren bevorzugten Ausführungsform der Erfindung können auf elektronischem Wege zur schriftlichen Kommentierung der auf den Datenträger aufzubringenden Daten ausdruckbare Daten an den Ort der Datenaufbringung befördert werden. Auf diese Weise kann die Datenfernübertragung auch zur Übertra-gung von ausdruckbaren Daten Verwendung finden.

Gemäß einer weiteren bevorzugten Ausführungsform der Erfindung können die ausdruckbaren Daten auf ein Cover einer Disk ausge-druckt werden. Auf diese Weise kann auch dem Cover eine sehr persönliche Note gegeben werden, die auf die im Cover ver-packte Disk abgestimmt und persönlich gestaltet ist.

Weitere Einzelheiten der Erfindung ergeben sich aus der nachfolgenden ausführlichen Beschreibung und den beigefügten Zeichnungen, in denen eine bevorzugte Ausführungsform eines Gerätes zur Durchführung des erfindungsgemäßen Verfahrens beschrieben ist.

In den Zeichnungen zeigen:

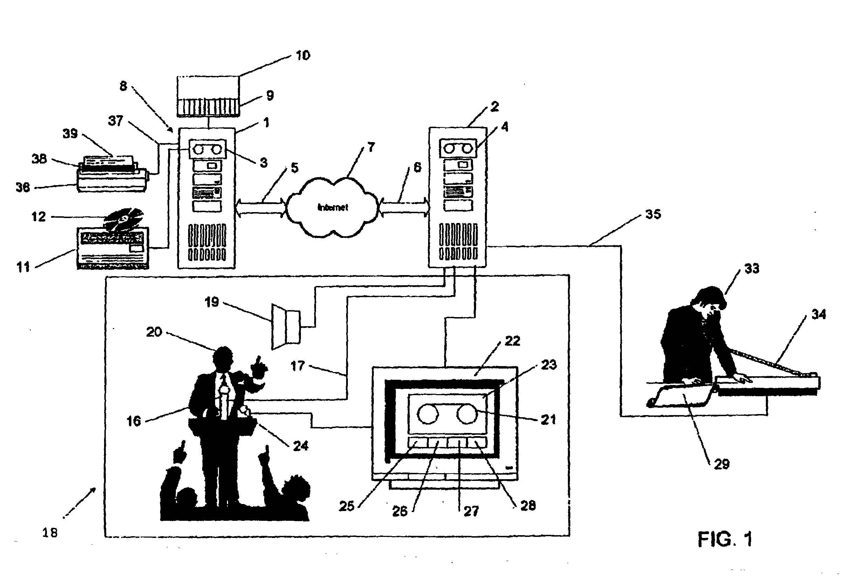

- Figur 1:: Eine stilisierte Ansicht einer Zusammenschaltung von Computern,

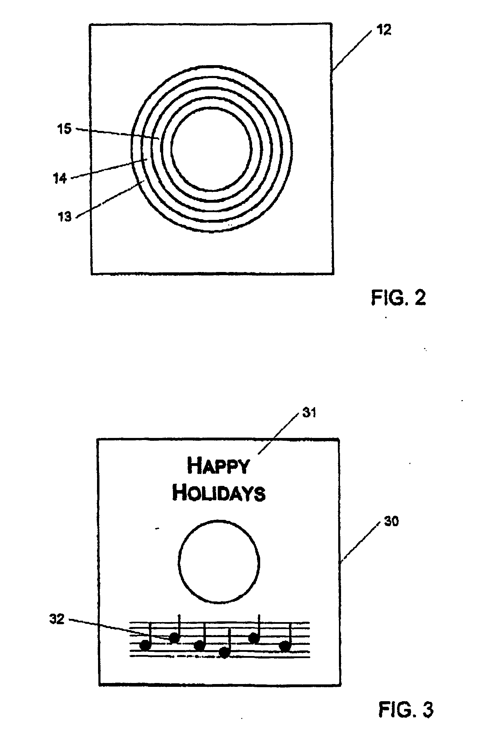

- Figur 2:: eine stilisierte Draufsicht auf einen Datenträger und
- Figur 3:: eine stilisierte Draufsicht auf ein Cover.

Das erfindungsgemäße Verfahren wird zweckmäßigerweise mindestens mit zwei EDV-Anlagen (1, 2) durchgeführt, von denen jede mit einem Laufwerk (3, 4) versehen ist. Die beiden EDV-Anlagen (1, 2) haben jeweils einen Zugang (5, 6) zum Internet (7). Die EDV-Anlage (1) gehört zu einem Betreiber (8), der unter anderem über eine große Sammlung (10) von Musikstücken auf Datenträgern (9) verfügt und diese urheberrechtlich verwerten darf.

Darüberhinaus besitzt der Betreiber (8) eine Brennapparatur (11), in der Datenträger (12), auf die Daten übertragen worden sind, gebrannt werden können. Diese Datenträger (12) werden beispielsweise auf einer oder mehreren Spuren (13, 14, 15) mit Daten versehen und anschließend in der Brennapparatur (11) gebrannt.

Die EDV-Anlage (2) gehört zu einem Nutzer (20), der beispielsweise als Sänger über ein Mikrofon (16) Sound-Daten durch eine Speiseleitung (17) in die Anlage (2) einspeist. Dabei richtet er sich nach einem ihm über das Internet (7) zugänglichen Musikstück, das er mit seiner EDV-Anlage (2) aus dem Internet (7) abruft und sich in seinem Studio (18) von einem Lautsprecher (19) vorspielen läßt.

Dieses Musikstück, das im Regelfall einen Vokalteil umfaßt, interpretiert der Nutzer (20), indem er den Vokalteil des Musikstückes in sein Mikrofon (16) hineinsingt. Dabei übt er sich und seine Stimme, indem er seinen Gesang mit Hilfe eines virtuellen Tonbandgerätes (21) aufnimmt und überprüft, das er auf einem Bildschirm (22) erscheinen läßt. Dieses virtuelle Tonbandgerät (21) besitzt ein Tonband (23), das er mit einem Schalter (24) wie ein reelles Tonbandgerät betreiben kann, nämlich mit Aufnahmefunktionen (25), Wiedergabefunktionen (26), Löschfunktionen (27), Lauf- und Stoppfunktionen (28). Während der Nutzer (20) in seinem Studio (18) in sein Mikrofon (16) hineinsingt, kann er gleichzeitig oder zu einem späteren Zeitpunkt seinen Gesang über den Lautsprecher (19) abrufen und überprüfen. Sollte er den Gesang für verbesserungswürdig erachten, sucht er auf seinem Tonbandgerät (21) die ihm mißfal-lende Stelle und singt sie neu. Dabei läßt er sich von der aus seiner EDV-Anlage abgerufenen Version des gesamten Musikstückes leiten, an dessen Gütevorstellungen er sich entweder anlehnt oder versucht, diesem Musikstück eine besondere Note zu verleihen.

Sollte schließlich die Überprüfung seines Gesangs ergeben, daß dieser die Qualität besitzt, um auf einen Tonträger (12) aufgenommen werden zu können, so verbindet der Nutzer (20) seine EDV-Anlage über das Internet (7) mit der EDV-Anlage (1) des Betreibers (8), auf die er seinen Datensatz überträgt. Dieser synchronisiert in seiner EDV-Anlage (1) den aus dem Internet (7) empfangenen Gesang des Nutzers (2) mit dem vorhandenen Musikstück und beschreibt mit dem synchroniserten Musikstück beispielsweise eine Spur (15) des Datenträgers (12). Auf den Spuren 13 und 14 können beispielsweise andere Interpretationen des Musikstücks aufgenommen werden, beispielsweise in der Spur 13 eine Version mit dem Originalinterpreten und auf der Spur 14 eine Bearbeitung des Musikstückes durch einen anderen Interpreten.

Der auf diese Weise beschriftete Datenträger (12) wird nunmehr in den Brennapparat (11) hineingegeben und dort gebrannt. Er steht nunmehr zur Versendung beispielsweise an den Nutzer (20) zur Verfügung, der seinerseits über die weitere Verwendung des gebrannten Datenträgers (9) entscheidet, beispielsweise diesen Datenträger an Freunde und Bekannte verschenkt.

Um zu verhindern, daß das Musikstück ohne Vokalteil einer unerwünschten Verwendung zugeführt wird, wird der Originalvokalteil aus dem Musikstück nicht vollkommen herausgenommen, sondern verbleibt in dem Musikstück als eine Hintergrundmelodie. Auf diese Weise wird eine unlautere Verwendung des entsprechenden Musikstückes verhindert.

Darüberhinaus kann der Datenträger (12) auch mit einem Kopierschutz versehen werden, der eine unerwünschte Übernahme des auf den Datenträger (12) vorhandenen Inhalts verhindert. Statt einer Übertragung der Daten über das Internet (7) durch e-mail können auch andere Übertragungswege gewählt werden, beispielsweise über ein eigens zu diesem Zwecke geschriebenes Programm. Mit Hilfe dieses Programmes können die Daten zwischen den beiden EDV-Anlagen (1, 2) unmittelbar über Telefonleitungen ausgetauscht werden.

Statt eines Vokalteils, den der Nutzer (20) auf den Datenträger (12) über sein Mikrofon (16) aufbringt, können auch andere Sound-Daten mit den aus der EDV-Anlage (1) übertragenen Sound-Daten des Betreibers (8) kombiniert werden. Dabei ist entweder daran zu denken, daß der Nutzer (20) einen Instrumentalteil mit dem aus der EDV-Anlage (1) übernommenen Musikteil kombiniert. Diesen Instrumentalteil kann der Nutzer (20) selbst geschaffen und intoniert haben oder von einem anderen Datenträger zur Kombination mit dem aus der EDV-Anlage (1) übernommenen Musikstück ausgewählt haben.

Dabei ist der Nutzer (20) auch nicht darauf angewiesen, daß ihm das zu interpretierende Musikstück aus der EDV-Anlage (1) übersandt wird. Dieses kann er auf andere Weise aussuchen und in seine EDV-Anlage einbringen, um sie dort mit Sound-Daten seiner Wahl zu kombinieren.

Statt einer Übergabe des interpretierten Musikstückes auf den Datenträger (12) kann auch daran gedacht werden, dieses interpretierte Musikstück in einen nicht dargestellten Server einzugeben, aus dem das kombinierte Musikstück von Interessenten abgerufen werden kann.

Statt der drei Spuren (13, 14, 15) kann auch daran gedacht werden, eine andere Zahl von Spuren auf dem Datenträger (12) vorzusehen. Auf jeder Spur (13, 14, 15) könnte dann das originale Musikstück in einer von den anderen Interpretationen abweichenden Art aufgenommen werden.

Die auf diese Weise entstehenden Datenträger (12) können im Rahmen von Audio- oder Fernsehsendungen einem mehr oder minder verständigen Publikum zugänglich gemacht werden mit dem Ziel, daß dieses die beste Interpretation benennt. Auf diese Weise kann auch ein Anreiz dafür geschaffen werden, den Gedanken der Interpretation von Musikstücken in eine große Zuhörerschaft hineinzutragen mit der Absicht, das Musikempfinden dieser Zuhörerschaft zu schulen. Dabei sind Wettbewerbe über den besten, lustigsten oder originellsten Interpreten denkbar.

Außer der Übertragung von Sound-Daten können auch ausdruckbare Daten über die Datenfernübertragung in Richtung auf den Be-treiber (8) versandt werden. Zu diesem Zwecke wird ein Papier (29), beispielsweise ein Cover (30) für einen Datenträger (12) mit Schriftzeichen (31) oder Zeichnungen (32) von einem Nutzer (33) versehen. Dieses beschriftete Papier (29) kann jedoch auch zur Erläuterung des auf den Datenträger (12) auf-genommenen Musikstückes dienen und gleichzeitig mit diesem versandt werden.

Dieses beschriftete Papier (29) wird in einen Scanner (34) eingelegt, der die Schriftzeichen (31) und Zeichnungen (32) abtastet und in Daten umsetzt. Diese Daten werden über eine Speiseleitung (35), die den Scanner (34) mit der EDV-Anlage (2) verbindet, in diese EDV-Anlage (2) eingespeist. Dabei können beispielsweise die Speiseleitungen (17, 35) in einen Bus zusammengefaßt werden.

Von der EDV-Anlage (2) werden sodann die Daten über das Internet (7) in die EDV-Anlage (1) übertragen. Mit dieser EDV-Anlage (1) ist ein Drucker (36) über eine Druckerleitung (37) verbunden. In diesen Drucker (36) kann in eine entsprechende Eingabeöffnung (38) das zu bedruckende Cover (39) eingelegt werden. Nach Ansteuerung des Druckers (36) durch die EDV-Anlage (1) wird das Cover (39) in den Drucker (36) eingezogen und dort mit den Schriftzeichen (31) und Zeichnungen (32) bedruckt.

## Patentansprüche

1. Verfahren zum Aufbringen von reproduzierbaren Daten auf einen Datenträger, dadurch gekennzeichnet, daß die auf den Datenträger (12) aufzubringenden Daten auf elektronischem Wege von einem Ort (18) ihrer Entstehung zu einem Ort (8) ihrer Aufbringung auf den Datenträger (12) befördert werden.

2. Verfahren nach Anspruch 1, dadurch gekennzeichnet, daß die Daten per e-mail befördert werden.

3. Verfahren nach Anspruch 1, dadurch gekennzeichnet, daß die Daten in einen Speicher einer ersten EDV-Anlage (2) aufgenommen werden, die die Daten über eine Datenfernübertragungsanlage (5, 6, 7) an eine sie aufnehmende zweite EDV-Anlage (1) abgibt, aus der die Daten auf einem Datenträger (12) übernommen werden.

4. Verfahren nach einem der Ansprüche 1 bis 3, dadurch gekennzeichnet, daß die Daten vor ihrer Aufnahme auf den Datenträger (12) in eine bereits vorhandene Datenmenge eingeordnet werden.

5. Verfahren nach Anspruch 4, dadurch gekennzeichnet, daß von der zweiten EDV-Anlage (1) empfangene Sound-Daten mit bereits vorhandenen Sound-Daten synchronisiert werden.

6. Verfahren nach Anspruch 4 oder 5, dadurch gekennzeichnet, daß ein erstes Musikstück in Sound-Daten umgesetzt wird und die übertragenen Sound-Daten eines zweiten Musikstückes mit den Sound-Daten eines ersten Musikstückes synchronisiert werden.

7. Verfahren nach Anspruch 6, dadurch gekennzeichnet, daß die Sound-Daten des ersten Musikstückes von einem Sänger (20) erzeugt werden, dessen Gesang mit dem zweiten Musikstück synchronisiert wird.

8. Vefahren nach Anspruch 7, dadurch gekennzeichnet, daß die Sound-Daten des Gesangs bei ihrer Aufnahme an den Sound-Daten des ersten Musikstückes orientiert werden.

9. Verfahren nach Anspruch 7 oder 8, dadurch gekennzeichnet, daß die Sound-Daten des ersten Musikstückes dem Sänger (20) übersandt werden, bei dem die Sound-Daten ins erste Musikstück übersetzt werden, der Gesang des Sängers (20) dem ersten Musikstück angepaßt wird und in entsprechende Sound-Daten übersetzt wird, die zum Zwecke der Synchronisation mit den Daten des zweiten Musikstückes an die zweite EDV-Anlage (1) abgegeben werden.

10. Verfahren nach einem der Ansprüche 3 bis 9, dadurch gekennzeichnet, daß die mit den Daten des zweiten Musikstückes synchronisierten Daten des ersten Musikstückes auf den Datenträger (12) eingebrannt werden.

11. Verfahren nach einem der Ansprüche 3 bis 9, dadurch gekennzeichnet, daß die mit den Daten des zweiten Musikstückes synchronisierten Daten des ersten Musikstückes in einem allgemein zugänglichen Server gespeicher werden.

12. Verfahren nach einem der Ansprüche 1 bis 11, dadurch gekennzeichnet, daß die Daten auf einer von mehreren verschiedenen Spuren (13, 14, 15) eines Datenträgers (12) gespeichert werden.

13. Verfahren nach Anspruch 12, dadurch gekennzeichnet, daß auf den anderen Spuren (13, 14), auf denen die synchronisierten Daten nicht gespeichert sind, andere Versionen des ersten Musikstückes gespeichert werden.

14. Verfahren nach Anspruch 12 oder 13, dadurch gekennzeichnet, daß auf einer der anderen Spuren (13) eine unbearbeitete und auf der anderen der anderen Spuren (14) eine bearbeitete Version des ersten Musikstückes gespeichert wird.

15. Verfahren nach einem der Ansprüche 9 bis 14, dadurch gekennzeichnet, daß den Sound-Daten des ersten Musikstückes beim Übersenden an den Empfänger (20) ein Störgeräusch überlagert wird.

16. Verfahren nach Anspruch 15, dadurch gekennzeichnet, daß den Sound-Daten des ersten Musikstückes als Störgeräusch ein als Hintergrundmusik gedämpfter Gesang eines Interpreten überlagert wird.

17. Verfahren nach einem der Ansprüche 1 bis 16, dadurch gekennzeichnet, daß der Datenträger (12) mit einem Kopierschutz versehen wird.

18. Verfahren nach einem der Ansprüche 7 bis 17, dadurch gekennzeichnet, daß der Gesang vom Sänger (20) zu Übungszwecken mehrmals wiederholt wird, bevor er in Daten umgesetzt und mit den Daten des zweiten Musikstückes synchronisiert wird.

19. Verfahren nach Anspruch 18, dadurch gekennzeichnet, daß dem Sänger (20) ein virtuelles Tonbandgerät (21) auf einen Bildschirm (22) projiziert wird, das über die üblichen Aufnahmefunktionen eines reellen Tonbandgerätes wie beispielsweise Vor- und Zurückspulen, Abhören und Übersprechen verfügt.

20. Verfahren nach einem der Ansprüche 1 - 19, dadurch gekennzeichnet, daß auf elektronischem Wege zur schriftlichen Kommentierung der auf den Datenträger (12) aufzubringenden Daten ausdruckbare Daten an den Ort (8) befördert werden.

21. Verfahren nach Anspruch 20, dadurch gekennzeichnet, daß die ausdruckbaren Daten in einer künstlerischen Aufmachung befördert werden.

22. Verfahren nach Anspruch 20 oder 21, dadurch gekennzeichnet, daß die ausdruckbaren Daten auf ein Cover einer Disk ausgedruckt werden.
